# EUROPEAN PATENT APPLICATION

(11) **EP 4 711 708 A1**
(43) Date of publication of application: **18.03.2026**
(21) Application number: 24200816.7
(22) Date of filing: 17.09.2024
(51) Int. Cl.: G01B 11/25, G01S 7/481

(54) **IMAGE SENSOR, CAMERA AND IMAGING SYSTEM WITH ASYMMETRICALLY LIGHT DIFFUSING LAYER FOR USE IN THREE-DIMENSIONAL IMAGING BASED ON LIGHT TRIANGULATION**

(71) Applicant: Sick IVP AB, 583 35 Linköping (SE)
(72) Inventor: MURHED, Anders, 582 46 Linköping (SE)
(74) Representative: Bergenstråhle & Partners AB

(57) **Abstract**

Image sensor (331; 431; 531') for use in a camera (330; 530) of an imaging system (305) for three-dimensional imaging of an object (320) based on light triangulation, the camera (330; 530) and the imaging system (305). The image sensor (331; 431, 531') comprising an image sensing area (333; 433; 533) that comprises rows (438) and columns (435) of pixel elements configured to sense light. An asymmetrically light diffusing layer (337; 437; 537) covers the image sensing area (333; 433; 533) so that incident light towards the image sensing area (333; 433; 533) will pass through and be spread by the asymmetrically light diffusing layer (337; 437; 537). Said light asymmetrically diffusing layer (337; 437; 537) is configured to spread light in a high diffusion direction and in a low diffusion direction that is orthogonal to the high diffusion direction. The high diffusion direction is along said columns (435) of pixels and the low diffusion direction is along said rows (438) of pixels, whereby the light when reaching the image sensing area (433; 533) will be spread to a greater extent along the columns (435) of pixels than along the rows (438) of pixels.

## Description

### TECHNICAL FIELD

Embodiments herein concern an image sensor for use in a camera of an imaging system for three-dimensional imaging of an object based on light triangulation. Embodiments herein also concern the camera with the image sensor and the imaging system.

### BACKGROUND

Industrial vision cameras and systems for factory and logistic automation may be based on three-dimensional (3D) machine vision, where 3D-images are captured, such as of an object. By 3D-images it is referred to images that comprise also "height", or "depth", information and not, or at least not only, information, such as intensity and/or color, regarding pixels in only two-dimensions (2D) as in a conventional image.

In general, each pixel of an image captured by a camera has a position in image sensor coordinates that corresponds to a position of what the camera and image sensor imaged in the real world, or more particularly, information about light from a position in the real world that was sensed by image sensing element(s) of the image sensor and which image sensing element(s) correspond to a pixel. Typically, it is reflected light from what is being imaged, for example of an object, that is being sensed. Depending on camera and system, what light is used, and how illumination by the light is provided, the sensed light may contain various information about the position that reflected the light, such as about position on an object being imaged. Thus, a pixel of the captured image has a position in image sensor coordinates that correspond to a position in the real world, such as a position on an object. The sensed light may contain also additional information about the position and object properties at that position, such as information from light intensity, color, reflectivity, scatter etc.

Many 3D machine vision cameras or systems, or in general 3D imaging systems, for 3D imaging, are based on multiple 2D images being captured by an image sensor of a camera, typically sequentially during a scan of the object. Each such 2D image may contain 3D information regarding a 2D profile of the object and thus the total of such 2D images may contain 3D information about the whole object and a 3D image of the whole object may be formed from this. The 3D image may be represented by a "point cloud" where respective point corresponds to a position on the object and is associated with coordinates in 3D regarding that point. Respective point may also be associated with further information about the point, for example color or other characteristics associated with the corresponding object point.

When a pixel has a 3D position instead of "only" a position in 2D, it may be named voxel.

Line scan image data results when image data of an image is scanned or provided one line at a time, typically by scanning an object to be imaged using a light plane projected as a light line on the object and measuring reflected light from the object.

A special case of 3D imaging by scanning is 3D imaging based on light triangulation, where structured light, typically a light plane, or "sheet of light", is used, and an object scanned through and/or by this light plane. A light line is projected on the object during the scan, corresponding to where said sheet or plane intersects with the object. Laser is often preferred but also other light sources able to provide structured light such as a light plane may be used, e.g. light sources able to provide light that stays focused and do not spread out too much, for example light provided by a laser or Light Emitting Diode (LED). Instead of a light plane corresponding to a "sheet of light", for example, a light plane corresponding to an edge of illumination, that is, a light edge, may be used.

3D machine vision systems are often based on light triangulation. In such a system there is a light source illuminating the object with structured light, such as a specific light pattern, typically a light plane as mentioned above. This kind of 3D machine vision systems or devices may be referred to as systems or devices for 3D imaging based on light, or light plane, triangulation, or simply laser triangulation when laser light is used. A light line projected on the object and is imaged by a camera, that is, the light reflected from the object is imaged. Along the light line, 3D characteristics is captured through the light triangulation, corresponding to a profile of the object with height information. By scanning the whole object like this, corresponding to a line scan, and involving movement of the line and/or object, 3D characteristics of the whole object can be captured, corresponding to multiple 2D profiles of the object and based on which a 3D image of the object can be formed as discussed above. To produce a profile image of the object during the scan, the reflected light from the object is captured by an image sensor of a camera, particularly intensity peaks thereof, are detected in the image data. The peaks occur at positions corresponding to locations on the object where the incident light, corresponding to said light line, was reflected from the object. The position in the image of a detected peak will map to a position on the object from where the light resulting in the peak was reflected in accordance with the light triangulation that the system is configured and has been setup to perform.

Peak detection is normally accomplished by identifying positions of intensity peaks in the image frames, for example by using a peak finding algorithm. There are many conventional peak finding algorithms. The imaging system is typically setup so that intensity peaks relating to reflected light should occur and be expected per column of the sensor and the position within the column maps to "height" or "depth" of the object that reflected the light. Intensity peaks are thus found along columns and there should be one peak per column that is "correct", that is, maps to a direct reflection of the illumination, such as said light line, from the surface of the object. The peak position is thereby a measure of the "height" or "depth" of the object when the image with the peak was taken.

If the intensity peaks have a light distribution that spread outside a single pixel, it is possible to determine the peal position with sub pixel resolution. Several peak finding algorithms are based on this. For this reason, and/or for other reasons, light lines, for example laser lines, that will cover more than one pixel on the sensor are sometimes desirable and used.

US 5,627,635 A discloses an apparatus for optimizing sub-pixel resolution in a triangulation-based target distance measuring device. The solution is based on defocusing for a spot triangulation sensor to get subpixel resolution.

US 6,624,899 B1 discloses a triangulation displacement sensor. Beam shaping element enlarges the size of an area of illumination on a linear array slightly. This allows the position of the beam on the array to be determined to a resolution of about 10th of the width of a detector pixel element.

### SUMMARY

In view of the above, an object is to provide one or more improvements or alternatives to the prior art, such as providing improvements regarding intensity peak positions with sub-pixel resolution for imaging system for three-dimensional imaging of an object based on light triangulation.

According to a first aspect of embodiments herein, the object is achieved by an image sensor for use in a camera of an imaging system for three-dimensional imaging of an object based on light triangulation. The image sensor comprises an image sensing area that comprises rows and columns of pixel elements configured to sense light. The image sensor further comprises an asymmetrically light diffusing layer covering the image sensing area so that incident light towards the image sensing area will pass through and be spread by the asymmetrically light diffusing layer and thereby reach the image sensing area with increased light spread. Said light asymmetrically diffusing layer is configured to spread light in a high diffusion direction and in a low diffusion direction that is orthogonal to the high diffusion direction. Said asymmetrically light diffusing layer is arranged in relation to the image sensing area so that its high diffusion direction is along said columns of pixels and its low diffusion direction is along said rows of pixels, whereby the light when reaching the image sensing area will be spread to a greater extent along the columns of pixels than along the rows of pixels.

According to a second aspect of embodiments herein, the object is achieved by a camera for use as camera of an imaging system for three-dimensional imaging of an object based on light triangulation. The camera comprises the image sensor of the first aspect.

According to a third aspect of embodiments herein, the object is achieved by an imaging system for three-dimensional imaging of an object based on light triangulation. The imaging system comprises the camera of the second aspect and a light source for providing light for illuminating the object. The camera with the image sensor and the image sensing area thereof are arranged in the imaging system for imaging reflected light, corresponding to said light reflected from the object, so that said columns in the high diffusion direction are in a direction along which intensity peak positions of the reflected light are determined as part of the three-dimensional imaging based on light triangulation.

Thanks to the asymmetrically light diffusing layer, light in the direction of columns of the image sensor is spread out and become distributed over more pixels than without the asymmetrically light diffusing layer diffuser, while at the same time light is spread less, and can even be made to substantially not spread further at all in the orthogonal direction, that is, between rows of the image sensor. This enables improved, sub-pixel, resolution regarding "height" or "depth" measures of the object the while at the same time it can be avoided, or at least be reduced, loss of details about the object being imaged in the orthogonal direction that have been found to be result if conventional symmetrical light diffusion is used in the context of 3D imaging based on light triangulation. In other words, improved sub-pixel resolution with the possibility of more accurate "height" or "depth" measures of the object with less sacrifice, or even without sacrifice, of resolution in the orthogonal direction on the image sensor, that is typically between rows of the image sensor, that in turn maps and corresponds to object details on the object "along the light", for example along a light line projected on the object when it is imaged.

### BRIEF DESCRIPTION OF THE DRAWINGS

Examples of embodiments herein are described in more detail with reference to the appended schematic drawings, which are briefly described in the following.
Figure 1 schematically illustrates an example of a prior art imaging system for three-dimensional imaging of an object based on light triangulation.
Figure 2A schematically illustrates a simplified example of a prior art imaging system based on light triangulation with a projected light line on an object being imaged by a conventional image sensor of a camera of the imaging system.
Figure 2B schematically illustrates a 3D view of the object in Figure 2A with projected light line.
Figure 2C schematically illustrates a top view of the image sensor with an example of how intensity peaks of said light line reflected from the object could be located on the image sensing area of the image sensor.
Figure 2D schematically illustrates a cross-sectional view of the image sensor with a transparent protective layer covering and thereby protecting the image sensing area.
Figure 2E is a stripped version of the cross-sectional view of Figure 2D, showing the transparent protective layer, a column of pixel elements of the image sensing area and how the reflected light line pass through the transparent protective layer and is incident on the pixel elements of the column.
Figure 2F schematically illustrates a portion of a top view of pixel elements of the image sensing area of the conventional image sensor and schematically exemplifies how light corresponding to a point of the reflected light line passes through the transparent protective layer and becomes incident on the pixel elements.
Figure 2G schematically shows a cross-sectional view as in Figure 2D with an additional beam shaping element as in the prior art and exemplifies how such principally would enlarge size of an illumination area on the image sensing area.
Figure 2H is a schematic top view of part of what is shown in Figure 2G.
Figure 3A schematically illustrates a portion of a top view of pixel elements of an image sensing area of an image sensor according to embodiments herein and schematically exemplifies how light corresponding to a point of a reflected light line, thanks to embodiments herein with an asymmetrically light diffusing layer, can be formed and be incident on pixel elements of the image sensor.
Figure 3B schematically shows a cross-sectional view of the column that in Figure 3A has illuminated pixel elements and is for explaining light spread along columns for embodiments herein.
Figure 3C schematically shows a cross-sectional view of a row in Figure 3A with pixel elements directly neighboring an illuminated pixel element and is for explaining light spread along rows for embodiments herein.
Figure 3D schematically illustrates a simplified example of an imaging system comprising a camera with image sensor according to embodiments herein.
Figure 4A schematically illustrates a top view of an image sensor that may correspond to any of the image sensors of Figures 4A-C.
Figures 4B-D relate to first, second and third examples of image sensors with asymmetrically light diffusing layer according to embodiments herein.
Figures 5A-B are schematic drawings to illustrate embodiments with a separate and interchangeable asymmetrically light diffusing layer that may be provided as a separate part between an image sensor and a lens of a camera.

### DETAILED DESCRIPTION

Embodiments herein are exemplary embodiments. It should be noted that these embodiments are not necessarily mutually exclusive. Components from one embodiment may be tacitly assumed to be present in another embodiment and it will be obvious to a person skilled in the art how those components may be used in the other exemplary embodiments.

An application area of embodiments herein is in, and with, imaging system for 3D imaging based on light triangulation, such system and the prior art situation will be described and explained in some detail. This will also facilitate understanding of benefits with embodiments herein when used with an imaging system for 3D imaging based on light triangulation.

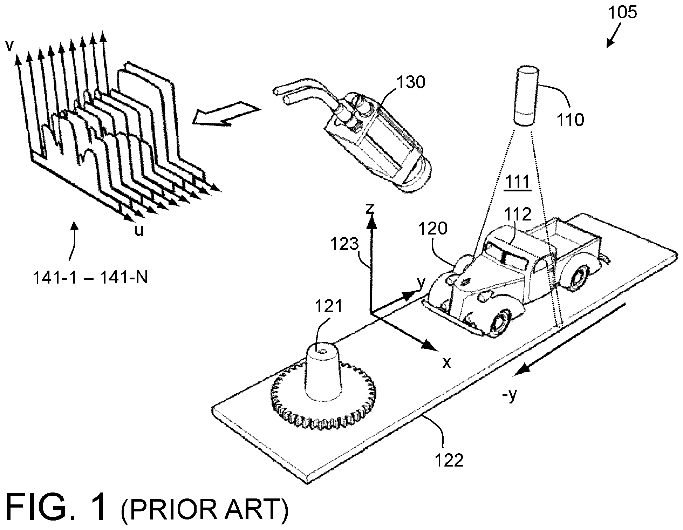

**Figure 1** schematically illustrates an example of an imaging system 105 for 3D imaging based on light triangulation as known from the prior art. The imaging system 105 may alternatively, for example, be named an imaging system for 3D machine vision based on light triangulation for capturing information on 3D characteristics of target objects. The imaging system 105 is in the figure shown in a situation of normal operation, that is, typically after calibration has been performed and the system is thus calibrated. The system 105 is configured to perform light triangulation, here in the form of sheet of light triangulation, that is, light triangulation where a light plane is used. The imaging system 105 further comprises a light source 110, such as a laser, for illuminating objects to be imaged with a specific light pattern, in the figure exemplified and illustrated as a light plane 111. The light may, but not need to be, laser light. The camera is typically configured and located so that it, based on the so called Scheimpflug principle, will have a focus plane co-located with, in other words, aligned, with the light plane 111, so that object reflections that occur in the light plane will be in focus in the image sensor. In the shown example, the target objects are exemplified by a first object 120 in the form of a car and a second object 121 in the form of a gear wheel construction. The objects that are imaged may be referred to as measure objects. When the specific light pattern 111 is incident on an object, this corresponds to a projection of the specific light pattern 111 on the object, which may be viewed upon as the specific light pattern 111 intersects the object. For example, in the shown example, the specific light pattern 111 exemplified as the light plane, results in a light line 112 on the first measure object 120. The specific light pattern 111 is reflected by the object, more specifically by portions of the object at the intersection, that is, at the light line 112 in the shown example. The imaging system 105 further comprises a camera 130 comprising an image sensor (not shown in Figure 1). The camera and image sensor are arranged in relation to the light source 110 and the objects to be imaged so that the specific light pattern, when reflected by the objects, become incident light on the image sensor. The image sensor is an arrangement, typically implemented as a chip, for converting incident light to image data. Said portions of the object, which by reflection causes said incident light on the image sensor, may thereby be captured by the camera 130 and the image sensor, and corresponding image data may be produced and provided for further use. For example, in the shown example, the specific light pattern 111 will, at the light line 112 on a portion of the car roof of the first object 120, be reflected towards the camera 130 and image sensor, which thereby may produce and provide image data with information about said portion of the car roof. In accordance with the principle of light triangulation, with knowledge of the geometry of the measuring system 105,for example how image sensor coordinates relate to world coordinates, such as coordinates of a coordinate system 123, for example Cartesian coordinates, relevant for the object being imaged and its context, the image data may be converted to information on 3D characteristics, for example in the form of a 3D shape or profile, of the object being imaged. The information on said 3D characteristics may comprise data describing 3D characteristics and be provided in a suitable format.

By moving the light source 110 and/or the object to be imaged, such as the first object 120 or the second object 121, so that multiple portions of the object are illuminated and cause reflected light upon the image sensor, in practice typically by scanning the objects, image data describing a more complete 3D shape of respective object may be produced, for example corresponding to multiple, consecutive, profiles of respective object, such as the shown profile images 140-1 - 140-N of the first object 120, where each profile image shows a contour of the first object 120 where the specific light pattern 111 was reflected when the image sensor of the camera unit 130 sensed the light resulting in the profile image. As indicated in the figure, a conveyor belt 122 or similar may be used to move the objects through the specific light pattern 112, with the light source 110 and the camera unit 130 typically stationary, or the specific light pattern 111 and/or the camera 130 may be moved over the object, so that all portions of the object, or at least all portions facing the light source 110, are illuminated and the camera receives light reflected from all parts of the object desirable to image.

As understood from the above, an image frame provided by the camera 130 and its image sensor, for example imaging the first object 120, may correspond to any one of the profile images 140-1 - 140-N. Each position of the contour of the first object shown in any of the profile images 140-1 - 140-N are typically determined based on identification of intensity peaks in image data captured by the image sensor and on finding the positions of these intensity peaks. The imaging system 100 and conventional peak finding algorithms are typically configured to, in each image frame, search for an intensity peak per pixel column. If sensor coordinates are *u, v* and for example *u*, as indicted in the figure, corresponds to pixel positions along rows in the image sensor and *v* corresponds to pixel positions along columns, there is for each position *u* of an image frame searched for peak position along *v* and the identified peaks in an image frame may result in one such "clean" profile image as shown in the figure, and the total of image frames and profile images can be used to create a 3D image of the first object 120.

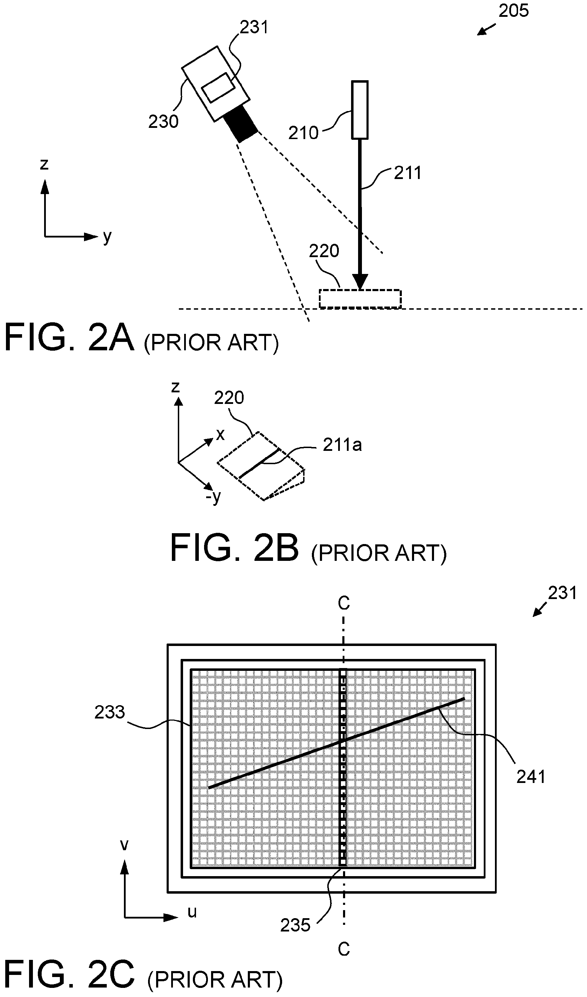

**Figure 2A** schematically illustrates a simplified example of a prior art 3D imaging system 205 that embodiments herein, discussed further below, may be based on and/or be used with. The shown system may correspond to the imaging system 105 but is shown in another schematic and simpler view. Details shown in the figure are to provide a context for explanation of embodiments herein further below. The system is for 3D imaging of object(s) based on scanning, more particularly the shown system is based on light triangulation. The shown imaging system 205 can be considered to correspond to a basic configuration and comprises: a camera 230 with an image sensor 231, a light source 210 for illuminating an object 220 to be imaged with a specific light pattern, such as a light plane 211. The object 220 to be imaged is illuminated by the light plane 211 in a field of view 225 of the camera 230. The camera 230 and image sensor 231 are arranged for sensing reflected light from the object 220 as part of said light triangulation.

**Figure 2B** schematically shows a reduced view in 3D of the exemplary object 220 shown in Figure 2A, where it is visible that the object 220 has a wedge shape. The light plane 211 can be seen as a projection in the form of a light line 211a on the object 220.

**Figure 2C** schematically illustrates a top view of the image sensor 231 with an example of how intensity peaks 241 of a reflected light line, corresponding to said light line 211a reflected from the wedge-shaped object 220, may be located on an image sensing area 233 of the image sensor 231. An exemplary pixel column 235 of the image sensing area 233 with light sensing elements corresponding to pixels of the image sensor is marked out and has a cross-sectional indication C-C along it in the figure.

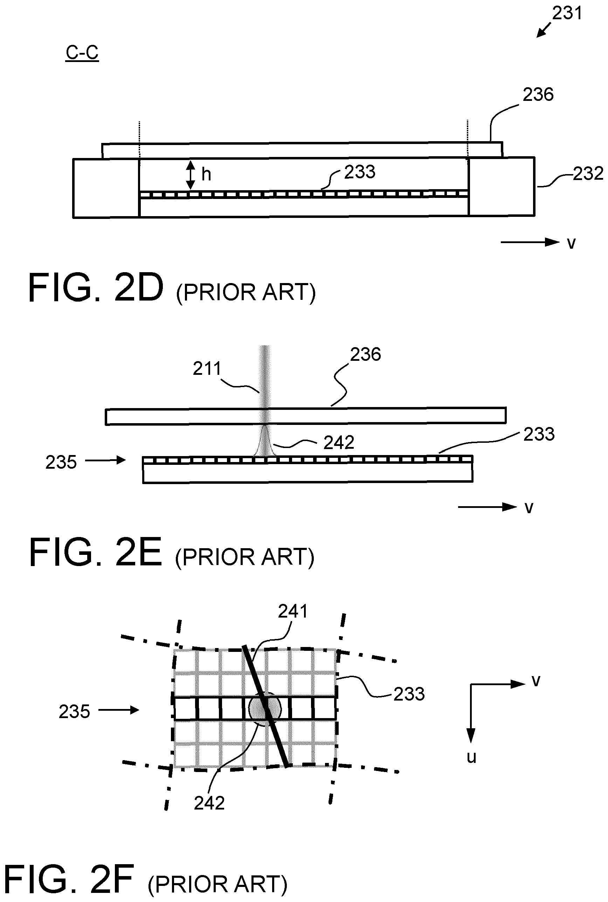

**Figure 2D** schematically illustrates a cross-sectional view C-C of the image sensor 231, that is, the shown cross-section is along the exemplary pixel column 235 marked C-C in Figure 2C. The pixel column 235, in practice the whole image sensing area 233, is covered by a transparent protective layer 236. This layer is for protecting the image sensing area 233 on its image sensing side while at the same time letting light through for the light sensing. The light sensing elements, thus the pixels, are thereby protected from mechanical damage, dust, etc. The figure also shows a support structure 232 for the image sensing area 233 and for the transparent protective layer 236. The transparent protective layer 236 is arranged substantially parallel to and with a distance from, and/or above, the image sensing area 233.

**Figure 2E** is a stripped version of the cross-sectional view of Figure 2D, showing the transparent protective layer 236, the pixel column 235 and schematically how a cross-section of the reflected light line pass through the transparent protective layer 236 and becomes incident on the image sensing area 233 and on part of the pixel column 235 thereof. The transparent protective layer 236 will affect the light through refraction and some scatter that will spread the light to some degree equal in all directions, even though this may be very slightly and in practice neglectable. Some spread will be due to refraction since the light is not perfectly orthogonally incident on the transparent protective layer. However, overall, the total effect on light spread introduced by a conventional transparent protective layer, such as the transparent protective layer 236, is typically so small that it can be assumed to be non-existent or at least neglectable. The light distribution of the illumination, thus the light plane 211, is for example determined by width of a laser used and/or how the light plane 211 and resulting light line 211a on the object 220 is formed. The width of the reflected light line incident on the image sensing area will also be determined by light distribution of the illumination, here the light line 211 and how the illuminated surface of the object 220 has caused spread through scatter when reflecting the light. Anyhow, the light that is incident on pixels of the image sensing area 233 will have certain light distribution with some peaks in the intensity. The position of a peak on the image sensing area 233 maps to a position on the object that reflected the light that was sensed, in accordance with the light triangulation. The light distribution may, as already mentioned, cover more than one pixel. If looking at pixels of the pixel column 235, a peak will typically be positioned within a pixel, and more particularly at some position within that pixel. However, since a single pixel of the sensing area 233 cannot sense light differently in different parts or positions within the pixel area, all light incident on the pixel is sensed as a single intensity value. Hence, with a narrow light distribution, and light line 211a that has thickness less or about width of pixel, the best sensor resolution in the v-direction in the figure, will correspond to the resolution of the pixels and cannot be better than the resolution of the image sensing area 233. However, if the light distribution would cover several pixels along columns, the peak can in fact be found with finer resolution than the pixel resolution, that is, a sub-pixel resolution can be achieved. This is utilized in the prior art mentioned in the Background.

However, when light spread is substantially symmetrical and applied in an imaging system as here, the light will not only spread out in the v-direction (columns direction), but also orthogonally, in the u-direction (row direction) on the sensor. The columns direction typically maps to "height" or "depth" of the object being imaged, as already mentioned, and the row direction typically maps to a position on the object along the light line 211a. Light spread in the row direction will cause some blur of image details on the object that extend in a direction that maps to the row direction. That is, details on the object that extends in a direction that maps to the row-direction will be more blurred in the image with spread of light. Increased light spread in this direction cannot be utilized to increase resolution as in the column direction. Resolution and image details in the row-direction may seem, and often is, of less importance, than resolution in the columns direction that maps to "depth" or "height".

The effects of light spread can be easier to understand by considering how a "point" on the object is illuminated and what happens with light reflected from that point, which is illustrated in the next figure.

**Figure 2F** is a schematic top view of part of what is shown in Figure 2E and the image sensing area 233. Part of the pixel column 235 and adjacent columns are shown and there is also shown an intensity peak line 241, corresponding to the reflected light line 211a, onto the image sensing area 233. An illuminated point of the object that maps to an intensity peak in the pixel column 235 and a light distribution 242 around this point is indicated in the figure, that is, light distribution with some symmetrical light spread, same in all directions around it. It can easily be realized from this that light spread is not only in the v-direction (column direction) where it may be used to be able to a peak position with sub-pixel resolution, but also in the u-direction (row direction) where the spread is undesirable since it contributes to spread of light between rows so that light mixes and cause blur of details in that direction.

The effect of light spread is even more clear from the next figures.

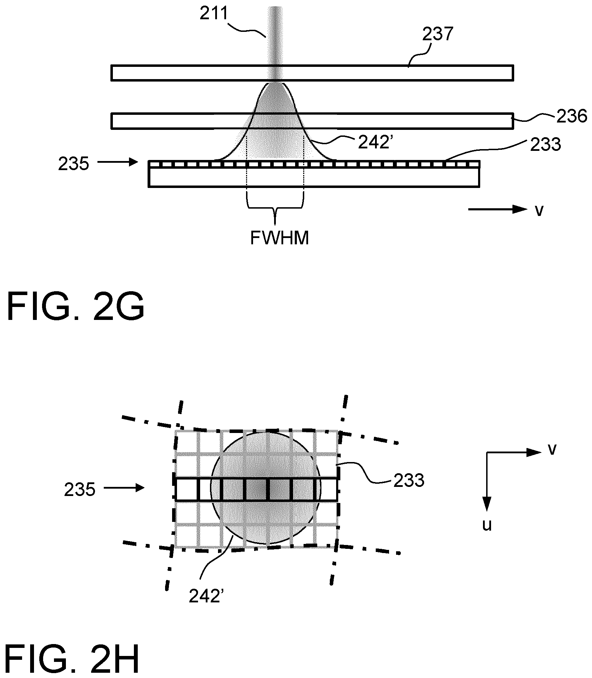

**Figure 2G** schematically shows a cross-sectional view as in Figure 2D with an additional beam shaping element 237, such as in the prior art, before the reflected light reaches the image sensor to cause an additional spread to the incoming reflected light and thereby an increased spread and "wider" light distribution.

**Figure 2H** is a schematic top view of part of what is shown in Figure 2G and the image sensing area 233. It is in the example of Figures 2G-H only considered light reflected from a point on the object and a further "spread out" light distribution 242' around this point caused by the additional light spread from the beam shaping element 237. The spread as such may be defined by how many pixels of the image sensor become illuminated in the column direction by light within, for example, the so-called Full Width at Half Maximum (FWHM). That is, the width of the light distribution where the intensity has decrease to half of its peak intensity. Alternatively, other measures than FWHM can be used. In the shown example the FWHM is about 5 pixels. This can provide a desirable sub-pixel resolution in the column-direction but will at the same time for an imaging system based on light triangulation, such as the imaging system 205, contribute to blur of details in the row-direction.

Embodiments herein are based on a realization of said detrimental effect in the row-direction if conventional, symmetrical, light spreading, or light diffusion, as discussed above, is used in the context of an imaging system based on light triangulation. It was found that this can be remedied by use of today available relatively new type of strongly asymmetrically light diffusing materials. Such material can be provided as a layer that diffuses light strongly in a high diffusion, or in other words high spread, direction while it substantially does not spread at all in a low diffusion direction, typically orthogonal to the high diffusion direction. An asymmetrically light diffusing layer like this may in principle act as a "line diffuser". The asymmetrically light diffusing layer is preferably arranged with, for example integrated with, the image sensor so that the high diffusion direction align with the columns of the light sensing pixel elements of the image sensor, or in other words, align with the pixel columns of the image sensing area of the image sensor.

As used herein, light diffusion added by an element or layer refers to that the element, at least in a direction where the element or layer has a diffusion effect, evenly or substantially evenly spread light that passes through the element or layer. That is, the light distribution is being widened and peak height is lowered along the respective diffusion direction but the diffusion as such should exclude change of the intensity peak location and basic shape of the light distribution in the direction with the diffusion effect. This makes light diffusion, that is, light spread by diffusion, a special case of more general light spread that also may be caused by for example light refraction that may change intensity peak location and may also affect and change basic shape of the light distribution. It is, as should be understood from the above and for embodiments herein, of interest to keep the intensity peak location and basic shape of light distribution so that there is no need to consider change of peak location and/or so that existing peak finding algorithms still can be used and be applied correspondingly as before.

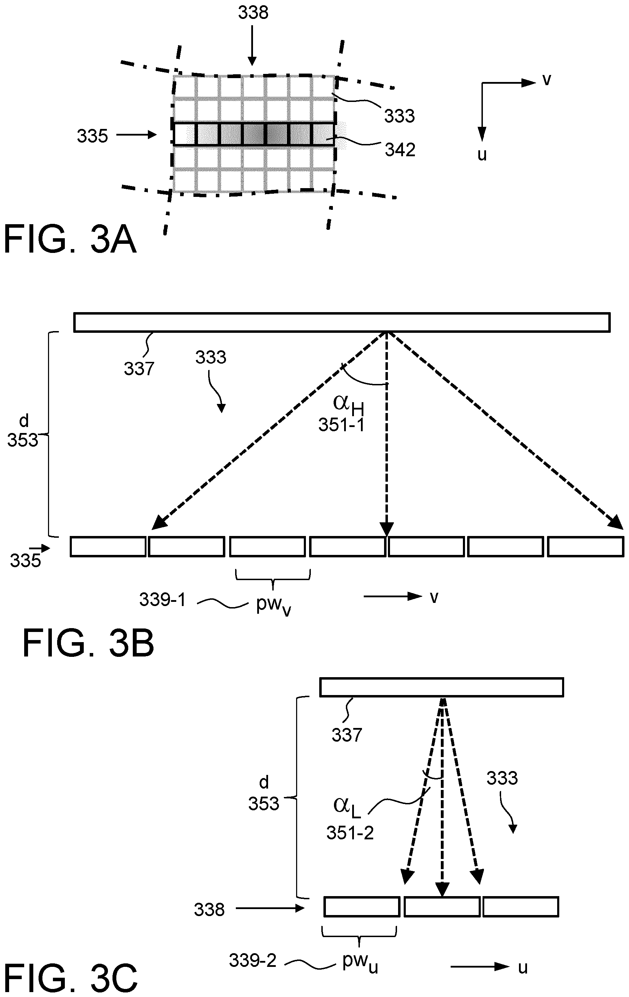

**Figures 3A-C**relate to an image sensor according to embodiments herein with an image sensing area 333 and an asymmetrically light diffusing layer 337 as discussed above. Only a part of the image sensor is shown. Figures 3A-C, mainly for explaining and discussing differences between embodiments herein and the prior art type of light diffusion elements if such would be applied, that is, such as described in the Background and discussed above. More detailed examples and variants of the image sensors are discussed further below.

Figure 3A schematically illustrates a portion of a top view of pixel elements of the image sensing area 333 of the image sensor for comparison with Figure 2H. The figure schematically exemplifies how light corresponding to a point of a reflected light line, thanks to the asymmetrically light diffusing layer 337 can be formed and be incident on pixel elements of the image sensor in an almost linear fashion. An illuminated object point, or illuminated small area of an object, is considered. That is, one object point that normally would reflect light on some pixel in a pixel row 338 and pixel column 335 with symmetrical light distribution. The asymmetrically light diffusing layer 337, here aligned with its high diffusion direction along pixel columns of the sensor, including the pixel column 335, has spread the light by diffusion before it reaches the image sensing area 333. As shown in the figure it has spread the light evenly and substantially only in the column direction, illustrated by a light distribution 342 indicated in the figure. The situation can be compared with the situation of Figure 2H and the light distribution 242'.

Figure 3B schematically shows a cross-sectional view of the pixel column 335 that in Figure 3A has illuminated pixel elements with the light distribution 342. The figure is for explaining light spread along columns provided by the asymmetrically light diffusing layer 337.

As used herein, "asymmetrically light diffusing layer" is a light diffuser in the form of a layer that diffuses light asymmetrically, that is, diffuse light more, or to a greater extent, in a certain direction or directions, such as in said high diffusion direction, compared to other direction or directions, such as said low diffusion direction. Typically, the high diffusion direction is the direction with most light diffusion added by the diffuser and the low diffusion direction is the direction with least light diffusion added by the diffuser and these directions are typically orthogonal to each other. Other directions of the diffuser may add light diffusions that are in-between the high-diffusion direction and the low-diffusion direction according some gradient or gradual change.

The asymmetrically light diffusion may have elliptical of similar distribution in different light diffusion directions. The light diffusion added, that is, contributed, by the diffuser, here the asymmetrically light diffusing layer, in the high diffusion direction may be with, or according to, a high diffusion spread half angle α_{H} 351-1 as indicted in the figure. The light spread in the low diffusion direction may accordingly be with, or according to, a low diffusion spread half angle α_{L}, further discussed below. Half angle refers to that the angle is towards one of two sides that the spread by diffusion is taking place, hence, the total spread is twice the half angle as realized from the figure. What affects the spread by diffusion when the light reaches the image sensing area 333, in addition to the diffusion spread angle, is the distance between the asymmetrically light diffusing layer and the light sensing area 333, indicated by a distance d 353 in Figure 3B. What further may be of interest is how large the pixels are and the distance between pixels, which, when looking in a certain direction, such as along columns as in Figure 3B, correspond to a pixel width in that direction, indicated as a pixel width p_{wy} 339-1 in the figure. In practice, typically the distance between pixels of image sensor is so small, for example 1/10 or less of the width, in comparison with the pixel width, that this distance can be neglected in the context of embodiments herein relating to pixel width. In case of an unusual design with, for some reason, significant distance between pixels, the skilled person has the capacity to take this into account and make suitable adjustment if needed based on what is disclosed herein.

Figure 3C schematically shows a cross-sectional view of the pixel row 338 that in Figure 3A intersects the pixel column 335 with the illuminated pixel elements having the light distribution 342, and hence relevant for explaining light spread by diffusion along rows as provided by the asymmetrically light diffusing layer 337. The light spread is here in the low diffusion direction and is with, or according to, a low diffusion spread half angle α_{L} 351-2 as indicated in the figure. The distance d 353 is evidently the same as in Figure 3B. A pixel width in the shown direction, that is, along rows, is a pixel width p_{wy} 339-2 as indicated in the figure.

The light should be spread by the asymmetrically light diffusing layer 337 in said high diffusion direction so that the high diffusion spread half angle α_{H} 351-1 is in a range of 10-30 degrees, preferably 15-25 degrees. A greater high diffusion spread can work as well but will typically result in so much light disappearing by being reflected away before it can be sensed by the image sensing area 333 that it may be of less interest in practice.

Further, the light should be spread by the asymmetrically light diffusing layer 337 in said low diffusion direction with a low diffusion spread half angle α_{L} 351-2 that is less than 5, 4, 3, 2, 1 or 0,5 degree(s). Of course, the less spread added in this direction by the asymmetrically light diffusing layer 337 is better, but some low spread in relation to the high diffusion direction may be acceptable. Note that spread greater than 5 degrees can be acceptable in some cases, for example if a very large high diffusion half angle is present.

The high diffusion spread half angle α_{H} 351-1 should be at least 4, 5, 6, 7, 8, 9, 10,15, 20, 25 or 30 times greater than said low diffusion spread half angle α_{L} 351-2. In general, the effect with sufficient spread for improved subpixel resolution for peak detection along columns, without substantial negative effect on resolution along rows, increases with higher asymmetry, but acceptable difference need not be extreme for all cases and applications of interest. That said, it is typically preferred that the asymmetrically light diffusing layer in embodiments herein, exemplified by the asymmetrically light diffusing layer 337 corresponds to an extreme elliptical diffuser, even so that it can be considered a line diffuser, that is, a diffusor that is basically not diffusing anything, or only within a single degree or less in the low diffusing direction while still spreading sufficiently much, such as 10-30 degrees, in the high diffusion direction. There should preferably at least be a 10 times asymmetry. The higher asymmetry the easier to accomplish low spread along the row while at the same time accomplishing sufficiently large spread along the columns and narrow light, for example laser, lines can then be used for the illumination which has other desirable effects.

Hence, an asymmetrically light diffusing layer corresponding to an extreme asymmetrical diffuser or even linear diffuser is typically preferred. This kind of diffuser is today commercially available and for example used to spread light from LEDs and spread light uniformly along and over building walls. For example, a company and manufacturer that operates under and uses the trademark Luminit^{®} provides extreme asymmetrical diffusors, with 1 degree or less spread in a low diffusion direction and up to at least 60 degrees spread in a high diffusion direction. Also, with the ongoing and expected development of new materials designed on nano levels, such as so called of so-called meta materials, it cannot be ruled out that there soon may be even more extreme diffusers and materials available that can be used.

However, as mentioned, in some cases and applications, it may be sufficient with 4-5 times more spread. For example, if a 0.5-pixel width spread to adjacent row(s) is acceptable and 3 pixels spread along columns is sufficient, a 20 degree spread half angle can be used in the high diffuse direction with a 3.6 degree spread half angle in the low diffuse direction, corresponding to 5,5 difference in spread. However, of course 20 degrees and lower than 3.6 degrees would be even better since it causes less spread between rows

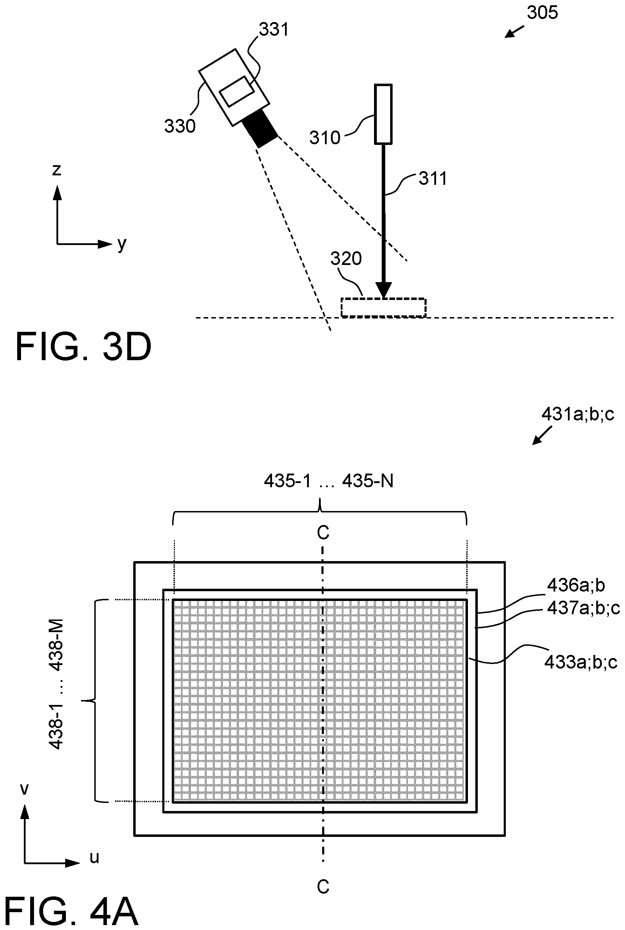

**Figure 3D** schematically illustrates a simplified example of an imaging system 305 comprising a camera 330 with an image sensor 331 according to embodiments herein. The image sensor 331 thus comprises the image sensing area 333 and asymmetrically light diffusing layer 337. The imaging system 305 is thus of the type discussed above, that is, an imaging system for three-dimensional imaging of an object based on light triangulation. The object is schematically exemplified by an object 620 in the figure and may correspond to the object 220 or any object for 3D imaging by light triangulation. The imaging system 305 may be as the prior art imaging system for three-dimensional imaging as discussed above, such as the imaging system 205, with the difference that the camera 330 and/or image sensor 331 is according to embodiments herein involving an asymmetrically light diffusing layer. Details and variants of the camera 330 and image sensor 331 are exemplified and discussed below in connection with further figures.

In other words, the imaging system 305 is for three-dimensional imaging of the object 320 based on light triangulation. The imaging system 305 comprises the camera 330 and further a light source 310 for providing light 311 for illuminating the object 320. The camera 330 with the image sensor 331 and the image sensing area 333 thereof are arranged in the imaging system 305 as part of said light triangulation for imaging reflected light, corresponding to said light 311 reflected from the object 320. The arrangement is so that said columns 335 in the high diffusion direction are in a direction along which intensity peak positions of the reflected light 311 are determined as part of the 3D imaging based on light triangulation.

Such an imaging system is, as already explained above, typically configured so that said light source 310 provides the illumination, that is, the light 311, as a light plane in an illumination direction, for example z as in the example, towards the object 320. The camera 330 and the image sensor 333 are arranged in relation to the illumination direction and the light plane so that real world coordinates along said illumination direction (z) in the light plane map to sensor coordinates along said columns of the image sensing area 333 of the image sensor 331, that is, in a column direction, such as v as in examples herein. This means that it is a matter of finding intensity peaks along columns on the image sensor 331, or in a resulting image from the image sensor, to find positions that map to illumination direction (z) positions in the light plane and that thus will correspond to "height" or "depth" information about the object 320.

In some embodiments of the imaging system 305, the asymmetrically light diffusing layer 337 is configured to affect said reflected light so that when it reaches the image sensing area 333, after having passed the asymmetrically light diffusing layer 337, the reflected light will have a FWHM that covers at least 3, 4 or 5 pixels in said high diffusion direction.

In some embodiments of the imaging system 305, the asymmetrically light diffusing layer 337 is configured to affect said reflected light so that when it reaches the image sensing area 333, after having passed the asymmetrically light diffusing layer 337, the reflected light will have a FWHM that covers at most 1.5 pixels, preferably at most 1 pixel, in said low diffusion direction if the reflected light before passing, that is, when incident on, the asymmetrically light diffusing layer 337 would have a FWHM that covers less than 1 pixel in said low diffusion direction. As already mentioned, light triangulation typically uses a light plane as the light 311, for example from laser, that results in a projection of a light line or light edge on the object 320, which then is reflected towards the camera 330 and image sensor 331. It is typically a direction along this line or edge that maps to the rows on the image sensor. During normal operation with such line or edge, there is thus no natural "width" of the light in that direction. However, the spread added by the asymmetrically light diffusing layer 337 in this direction, that is, in the low diffusion direction, can still be checked and/or be used for configuring the imaging system 305 in accordance with these embodiments. This can for example be accomplished by temporary replacing the light line or light edge with a light point, for example with a width corresponding to the width of the light line, for example laser, that should be below 1 pixel in width. Then illuminating the object 320 with this light point instead and see how the width of the point is affected along the rows and that the FWHM does not spread more than in accordance with the present embodiments.

**Figures 4A-D**relate to first, second and third examples of embodiments herein with such asymmetrically light diffusing layer as discussed above in relation to Figures 3A-D, corresponding to asymmetrically light diffusing layer 437a;b;c in Figures 4A-D.

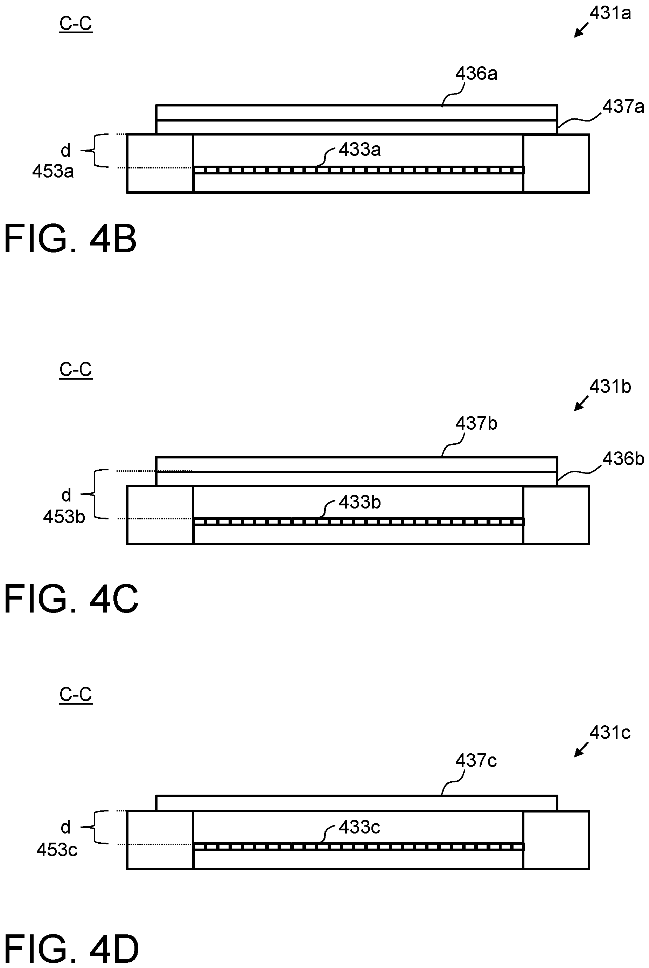

Figure 4A schematically illustrates a top view of image sensors 431a-c shown in cross sectional views in Figures 4B-D, respectively. The top view looks the same for all image sensors 431a-c and to simplify only a single top view is shown. What is discussed in relation to Figure 4A is thus valid for respective image sensor 431a;b;c, separately. The specifics of respective image sensor and differences between them are discussed below in relation to Figures 4B-D. There is a cross-sectional indication C-C in Figure 4A that indicates position of the cross sections shown in Figures 4B-D.

The image sensor 431a;b;c is for use in a camera, for example the camera 330, of an imaging system, for example the imaging system 305, for three-dimensional imaging of an object, for example the object 320, based on light triangulation.

The image sensor 431a;b;c comprises an image sensing area 433a;b;c that comprises rows 438 and columns 435 of pixel elements configured to sense light. In the shown example there are M rows, numbered 438-1 to 438-M, and N columns, numbered 435-1 to 435-N. Any of the rows 438 may correspond to the row 338 and any of the columns 435 may correspond to the column 335. The image sensor 431a;b;c further comprises the asymmetrically light diffusing layer 437a;b;c covering the image sensing area 433a;b;c so that incident light towards the image sensing area 433a;b;c will pass through and be spread by the asymmetrically light diffusing layer 437a;b;c and thereby reach the image sensing area 433a;b;c with increased light spread.

Said light asymmetrically diffusing layer 437a;b;c is configured to spread light in a high diffusion direction and in a low diffusion direction that is orthogonal to the high diffusion direction. Said asymmetrically light diffusing layer 437a;b;c is further arranged in relation to the image sensing area 433a;b;c so that its high diffusion direction is along the columns 435 of pixels and its low diffusion direction is along the rows 438 of pixels. As a result, when reaching the image sensing area 433a;b;c, the light will be spread to a greater extent along the columns 435 of pixels than along the rows 438 of pixels.

Thanks to the asymmetrically light diffusing layer 337; 437a;b;c, light in the direction of columns of the image sensor is spread out and become distributed over more pixels than without the asymmetrically light diffusing layer. Light in the orthogonal direction, that is, between rows of the image sensor is on the other hand substantially not spread at all. This enables improved, sub-pixel, resolution in determination of intensity peak positions in the column direction, which for example can be utilized by using the image sensor 421a;b;c in an imaging system for three-dimensional imaging of an object based on light triangulation, such as the imaging system 305. More particularly, it is enabled improved, sub-pixel, resolution regarding "height" or "depth" while at the same time it can be avoided or at least reduced "smear out effects" with loss of details in the orthogonal direction. Hence, in profile images of an object provided by the light triangulation it is enabled increased sub-pixel resolution regarding depth and height information about objects being imaged by such system.

Further advantages associated with embodiments herein is that better reflectance data is enabled, sharper light lines, typically leaser lines, can be used, which cause less other artifacts on edges in the scan direction. Also, laser speckles can be smeared out in the column direction and problems related to such speckles be reduced with for example result that intensity peak positions can be determined even more accurately.

The asymmetrically light diffusing layer 437a;b may be arranged as a further layer on either side of a transparent protective layer 436a;b, that is covering and thereby protecting the image sensing area 433a;b on its image sensing side. Two variants of these embodiments are further discussed below in relation to Figures 4B-C. The transparent protective layer 426a;b as such may be as in the prior art and as discussed above.

The asymmetrical light diffusing layer 437a;b may part of, such as produced, as an integrated circuit component that corresponds to the image sensor 431a;b. Alternatively, an integrated circuit component that corresponds to a conventional image sensor with transparent protective layer may be modified and thereby become the image sensor 431a;b. The asymmetrical light diffusing layer 437a;b may be attached to the transparent protective layer 436a;b by an optical glue with refractive properties adapted to those of the asymmetrical light diffusing layer 437a;b and/or the transparent protective layer 436a;b to avoid or keep down light spread by refraction introduced by the glue interface. Preferably the optical glue has the same or substantially the same refractive index as the transparent protective layer 436a;b. Alternatively, the asymmetrically light diffusing layer may be arranged with a small but sufficient space from the transparent protective layer to avoid physical contact between the layers that else may result in undesirable light interference patterns. In these embodiments, the asymmetrically light diffusing layer 437a;b may be attached, for example mechanically and/or chemically by glue or similar, to the transparent protective layer 436a;B outside the image sensing area 433a;b and/or at its perimeter so that points of attachment are outside the image sensing area.

Figure 4B schematically shows a cross-sectional view of the image sensor 431a and correspond to said first example in accordance with some embodiments herein. The asymmetrically light diffusing layer 437a is in these embodiments arranged as a further layer on a side of the transparent protective layer 436a that is facing the image sensing area 433a. This helps keeping spread between rows low while a sufficient spread stull can be accomplished along the columns. A conventional transparent protective layer may also have a thickness that makes too much of additional distance from the image sensing area if the asymmetrically light diffusing layer is placed on the other side, facing away from the image sensing area, resulting in more spread than desirable between the rows. However, in some situations it can still be preferred with such an "outer" asymmetrically light diffusing layer.

Figure 4C schematically shows a cross-sectional view of the image sensor 431b and correspond to said second example in accordance with some embodiments herein. The asymmetrically light diffusing layer 437b is in these embodiments arranged as a further layer on a side of the transparent protective layer 436b that is facing away from the image sensing area 433b. An advantage with these embodiments is that it simplifies use and modification of an existing image sensor with an already existing transparent protective layer.

Figure 4D schematically shows a cross-sectional view of the image sensor 431c and correspond to said third example in accordance with some embodiments herein. The asymmetrically light diffusing layer 437c is here functioning also as a transparent protective layer directly facing and covering the image sensing area 433c. With an asymmetrically light diffusing layer there may be no need with a conventional transparent protective layer. Functioning also as a transparent protective layer means that a conventional such layer need not be present as shown in the figure. By directly facing is here meant that there may be no other layer in between.

In these embodiments, the asymmetrical light diffusing layer may part of, such as produced, as an integrated circuit component that corresponds to the image sensor 431c. Alternatively, an integrated circuit component that corresponds to a conventional image sensor with transparent protective layer may be modified by replacing it with the asymmetrically light diffusing layer 437c.

These embodiments have an advantage of allowing an asymmetrically light diffusing layer to be more freely placed and one less layer is needed to be present. This also means there is no need to consider optical effects that else may occur in the interface between layers as discussed above.

If the an image sensor is produced only for light triangulation purposes, or for any other purpose with peak determination along columns, an asymmetrically light diffusing layer that is an integral part of the image sensor may be advantageous and, as mentioned above, enables arranging the asymmetrically light diffusing layer closer to and/or at a desirable distance to the image sensing area, without having to take into consideration a separate transparent protective layer and/or doing modifications post production of the image sensor. However, such image sensor becomes less versatile if it shall or should be possible to use it also for applications where asymmetrical light diffusion is not desirable. Hence, it may still be preferred, at least in some embodiments, to have a separate asymmetrical light diffusing layer, and preferably one that can easily be added post manufacturing to an image sensor with or without a conventional transparent protective layer. Also, if the transparent protective layer has some further function, for example acting as a filter, it may be difficult to combine also such function with the asymmetrically light diffusing layer. The next embodiments to be discussed concern a case with a separate and interchangeable asymmetrically light diffusing layer that may be provided as a separate part between image sensor and lens of a camera, or that is integrated with a lens part for the camera. Hence:

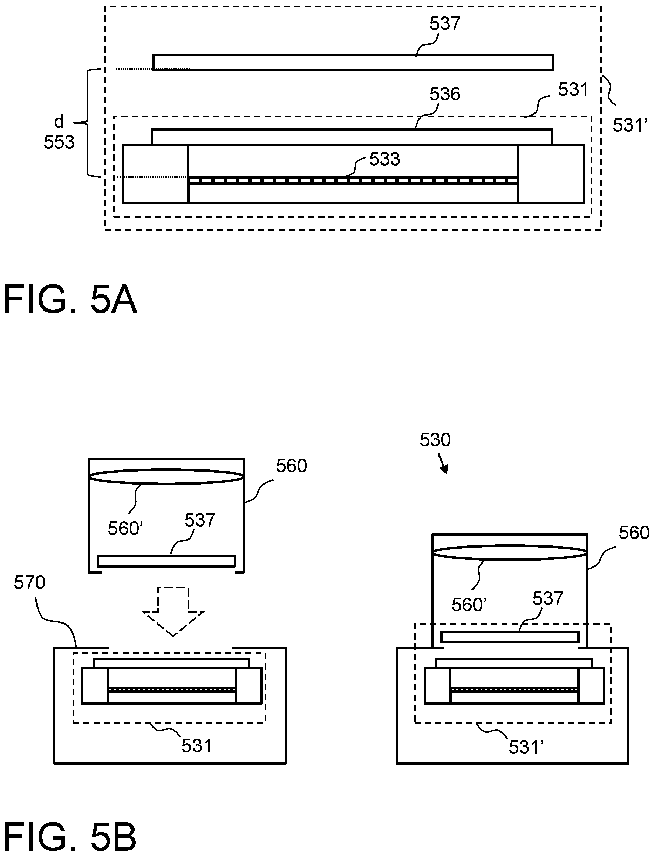

**Figures 5A-B**are schematic drawings to illustrate embodiments with a separate and interchangeable asymmetrically light diffusing layer 537 that may be provided as a separate part between an image sensor 530 and a lens 560' of a camera 530. The image sensor 531 may correspond to a conventional sensor, for example as used in 3D imaging based on light triangulation, with or without a transparent protective layer 536 that if present may be as discussed above. Alternatively, or additionally, the asymmetrically light diffusing layer 537 may be integrated with a lens part 560 for a camera, such that an image sensor 531' with the asymmetrically light diffusing layer 537 is formed when the parts are attached, such as mounted, together. What is shown and discussed in relation to Figures 5A-B may be considered a fourth example of embodiments herein.

Figure 5A schematically illustrates a simplified top view of the image sensor 531'. Some parts are missing in Figure 5A, but Figure 5B contains an example with further detail of how what is shown in Figure 5A may be implemented. By being in a separate part from other parts of the image sensor and/or replaceable, the asymmetrical light diffusing layer 537 can more easily be changed to another asymmetrical light diffusing layer that may have other properties, such as other spread by diffusion and/or diffusion directions, for example to better suit a particular application or use case. Also, a distance d 553 between the asymmetrical light diffusing layer 537 and the light sensing area 533 of the image sensor 531 can be changed when changing asymmetrically light diffusion layer 537. This can be done without having to change the rest of the image sensor 530 and thus not having to replace he whole image sensor and for example camera housing that contains it.

Figure 5B schematically shows two side views of the camera 530 and lens part 560 separately and mounted to each other, respectively. As can be seen there is a camera housing part 570 that contains the image sensor 531. The lens part 560 comprises the lens 560' and the asymmetrical light diffusing layer. The distance d 553 is formed when the lens part 560 is mounted to the hosing part 570 and may be predetermined and/or associated with the lens part 560 so that a certain lens part results in a suitable distance d when mounted to the housing part 570- the lens part. There may be multiple lens parts corresponding to the lens part 560 that may differ regarding lens properties and/or asymmetrical light diffusion layer properties and/or in the distance d being provided. An alternative is to provide a specific component or part with the asymmetrically light diffusing layer, that is, separate from both the housing part and a lens part (without the asymmetrically light diffusing layer in this case). Such component or part with the asymmetrical light diffusing layer can be provided separately similar to and/or as an extension tube or extension ring to be mounted between a lens part with lens and a housing part with image sensing part of the image sensor.

Note that any enumerating terminology used herein, such as first device, second device, first surface, second surface, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

In the drawings, features that may be present in only some embodiments are typically drawn using dotted or dashed lines.

When using the word "comprise" or "comprising" it shall be interpreted as nonlimiting, that is, meaning "consist at least of".

The embodiments herein are not limited to the above-described embodiments. Various alternatives, modifications and equivalents may be used. Therefore, the above embodiments should not be taken as limiting the scope of the present disclosure, which is defined by the appending claims.

## Claims

1. Image sensor (331; 431; 531') for use in a camera (330; 530) of an imaging system (305) for three-dimensional imaging of an object (320) based on light triangulation, the image sensor (331; 431, 531') comprising an image sensing area (333; 433; 533) that comprises rows (438) and columns (435) of pixel elements configured to sense light, wherein the image sensor (331; 431; 531') further comprises an asymmetrically light diffusing layer (337; 437; 537) covering the image sensing area (333; 433; 533) so that incident light towards the image sensing area (333; 433; 533) will pass through and be spread by the asymmetrically light diffusing layer (337; 437; 537) and thereby reach the image sensing area (333; 433; 533) with increased light spread, said light asymmetrically diffusing layer (337; 437; 537) being configured to spread light in a high diffusion direction and in a low diffusion direction that is orthogonal to the high diffusion direction, wherein said asymmetrically light diffusing layer (437; 537) is arranged in relation to the image sensing area (433; 533) so that its high diffusion direction is along said columns (435) of pixels and its low diffusion direction is along said rows (438) of pixels, whereby the light when reaching the image sensing area (433; 533) will be spread to a greater extent along the columns (435) of pixels than along the rows (438) of pixels.

2. The image sensor as claimed in claim 1, wherein light is spread by the asymmetrically light diffusing layer (337; 437; 537) in said high diffusion direction with a high diffusion spread half angle (351-1) that is in a range of 10-30 degrees, preferably 15-25 degrees.

3. The image sensor as claimed in any one of claims 1-2, wherein light is spread by the asymmetrically light diffusing layer (437; 537) in said low diffusion direction with a low diffusion spread half angle (351-2) that is less than 5, 4, 3, 2, 1 or 0,5 degree.

4. The image sensor as claimed in any one of claims 1-3, wherein said high diffusion spread half angle (351-1) is at least 4, 5, 6, 7, 8, 9, 10, 15, 20, 25 or 30 times greater than said low diffusion spread half angle (351-2).

5. The image sensor as claimed in any one of claims 1-4, wherein the asymmetrically light diffusing layer (437a;b) is arranged as a further layer on either side of a transparent protective layer (436a;b) that is covering and thereby protecting the image sensing area (433a;b) on its image sensing side.

6. The image sensor as claimed in claim 5, wherein the asymmetrically light diffusing layer (437a) is arranged as the further layer on a side of the transparent protective layer (436a) that is facing the image sensing area (433a).

7. The image sensor as claimed in any one of claims 1-4, wherein the asymmetrically light diffusing layer (437c) is functioning also as a transparent protective layer directly facing and covering the image sensing area (433c).

8. Camera (330: 530) for use as camera of an imaging system (305) for three-dimensional imaging of an object (320) based on light triangulation, wherein the camera (330; 530) comprises the image sensor (331; 431; 531') as claimed in any one of claims 1-7.

9. Imaging system (305) for three-dimensional imaging of an object (320) based on light triangulation, wherein said imaging system (305) comprises the camera (330: 530) as claimed in claim 8 and a light source (310) for providing light (311) for illuminating the object (320) and wherein the camera (330; 530) with the image sensor (331; 431; 531') and the image sensing area (333; 433; 533) thereof are arranged in the imaging system (305) for imaging reflected light corresponding to said light (311) reflected from the object (320), so that said columns (335) in the high diffusion direction are in a direction along which intensity peak positions of the reflected light (311) are determined as part of the three-dimensional imaging based on light triangulation.

10. The imaging system as claimed in claim 9, wherein, the asymmetrically light diffusing layer (437; 537) is configured to affect said reflected light so that when it reaches the image sensing area (433; 533), after having passed the asymmetrically light diffusing layer (437; 537), the reflected light will have a Full Width at Half Maximum, FWHM, that covers at least 3, 4 or 5 pixels in said high diffusion direction.

11. The imaging system as claimed in claim 10, wherein, the asymmetrically light diffusing layer (437; 537) is configured to affect said reflected light so that when it reaches the image sensing area (433; 533), after having passed the asymmetrically light diffusing layer (437; 537), the reflected light will have a Full Width at Half Maximum, FWHM, that covers at most 1.5 pixels, preferably at most 1 pixel, in said low diffusion direction if the reflected light before passing the asymmetrically light diffusing layer (437; 537) has a FWHM that covers less than 1 pixel in said low diffusion direction.
